(19) Europäisches Patentamt
European Patent Office
Office européen des brevets

(11) Publication number: 0 319 346 A2

# (12) EUROPEAN PATENT APPLICATION

(21) Application number: 88311494.4

(22) Date of filing: 05.12.88

(51) Int. Cl.4: C 08 J 5/24
C 08 K 7/02

(30) Priority: 04.12.87 JP 305591/87
04.12.87 JP 305592/87
04.12.87 JP 305593/87

(43) Date of publication of application:
07.06.89 Bulletin 89/23

(84) Designated Contracting States: DE FR GB IT

(71) Applicant: UBE INDUSTRIES, LTD.
12-32, Nishihonmachi 1-chome
Ube-shi, Yamaguchi-ken 755 (JP)

(72) Inventor: Yamamoto, Shinji c/o Hirakata Laboratory
of Ube Industries, Ltd. 3-10, Nakamiyakitamachi
Hirakata-shi Osaka-fu (JP)

Tanaka, Hideho c/o Hirakata Laboratory
of Ube Industries, Ltd. 3-10, Nakamiyakitamachi
Hirakata-shi Osaka-fu (JP)

Sasaki, Hiroshige c/o Hirakata Laboratory
of Ube Industries, Ltd. 3-10, Nakamiyakitamachi
Hirakata-shi Osaka-fu (JP)

Taga, Takefumi c/o Hirakata Laboratory
of Ube Industries, Ltd. 3-10, Nakamiyakitamachi
Hirakata-shi Osaka-fu (JP)

Miura, Tadashi c/o Hirakata Laboratory
of Ube Industries, Ltd. 3-10, Nakamiyakitamachi
Hirakata-shi Osaka-fu (JP)

Nishimura, Kazuo c/o Hirakata Laboratory
of Ube Industries, Ltd. 3-10, Nakamiyakitamachi
Hirakata-shi Osaka-fu (JP)

Otsuka, Hiroyuki c/o Hirakata Laboratory
of Ube Industries, Ltd. 3-10, Nakamiyakitamachi
Hirakata-shi Osaka-fu (JP)

(74) Representative: Myerscough, Philip Boyd et al
J.A.Kemp & Co. 14, South Square Gray's Inn
London, WC1R 5EU (GB)

## (54) Interply-hybridized laminated material.

(57) The present invention provides a process for preparing an interply-hybridized laminated material which comprises impregnating carbon fiber and inorganic fiber composed of Si, Ti or Zr, C and O with thermosetting resin to form respective prepregs and laminating the prepregs, wherein (i) the ratio of the tensile modulus of said carbon fiber to that of said inorganic fiber is 0.6/1 to 1.4/1, or (ii) the lamination structure is symmetrical along the lamination thickness with regard to the central planar area, or (iii) one of the outermost two layers is a carbon fiber-containing prepreg and the other is an inorganic fiber-containing prepreg.

EP 0 319 346 A2

## Description

### Interply-hybridized laminated material

FIELD OF THE INVENTION

This invention relates to an interply-hybridized laminated material having excellent compressive strength manufactured by impregnating carbon fibers and specific inorganic fibers with the thermosetting resin to form prepregs and laminating these prepregs. Further, this invention relates to an interply-hybridized laminated material free from warpage. Furthermore, it relates to an interply-hybridized laminated material excellent in flexural strength.

DESCRIPTION OF THE PRIOR ARTS:

A carbon fiber-reinforced plastic composite material is used in articles for sports and leisure use, since it has high specific strength and specific modulus of elasticity. However, this material has technical problems that it has low compressive strength or flexural strength and further, it has low extensibility and rather high fragility.

Therefore, attempts have been made to overcome the above problems by combining layers of a carbon fiber and other fiber, i.e., forming so-called hybrid laminated material. And a glass fiber and aramid fiber have been so far preferably used in combination with a carbon fiber. However, the glass fiber has drawbacks of low strength and modulus of elasticity, and, to make the matter worse, it increases weight. The aramid fiber has high extensibility, but it has drawbacks of low compressive strength and high moisture absorbability. Therefore, it can hardly be said that plastic laminated materials obtained by using these fibers in combination with a carbon fiber are satisfactory in practical use.

Japanese Laid-Open Patent Publication No. 7737/1987 discloses a laminated material obtained by impregnating an inorganic fiber composed of elements Si, Ti or Zr, C and O and a carbon fiber with plastics to form prepregs, laminating the prepregs, and heating the laminated prepregs under pressure, i.e., a so-called interply-hybridized laminated material. This laminated material makes the most of the excellent characteristics of the above inorganic fibers, i.e., good adhesion property with a matrix resin and flexibility of the fiber itself, and it is therefore superior in tensile strength, interlaminar shear strength and Charpy impact strength to carbon fiber-reinforced plastic composite materials.

The above interply-hybridized laminated material is required to have high compressive strength in addition to the above strengths. From this viewpoint, the laminated material disclosed in the above Publication still has some room for improvement in compressive strength as shown in Examples described in said Publication.

It is a problem of the above interply-hybridized laminated material that said material can hardly be used as structural materials of which high dimensional accuracy is required, since the difference in modulus of elasticity or coefficient of thermal expansion beween a carbon fiber and inorganic fiber used in the material causes a warpage.

Futher to the above strengths, high flexural strength is also required of the above interply-hybridized laminated material. Considering Examples in the above Publication from this viewpoint, it can hardly be said that the laminated material disclosed in said Publication has satisfactory properties as far as the flexural strength is concerned.

SUMMARY OF THE INVENTION:

It is an object of this invention to provide an interply-hybridized lamianted material which is not only excellent in tensile strength, interlaminar shear strength and Charpy impact strength but also excellent in compressive strength.

It is another object of this invention to provide an interply-hybridized laminated material which is not only excellent in tensile strength, interlaminar shear strength and Charpy impact strength but also free from warpage.

It is further another object of this invention to provide an interply-hybridized laminated material suitably usable as a structural material of which high dimensional accuracy is required.

It is yet another object of this invention to provide an interply-hybridized laminated material which is not only excellent in tensile strength, interlaminar shear strength and Charpy impact strength but also excellent in flexural properties such as flexural strength.

The present invention 1 provides an interply-hybridized laminated material manufactured by impregnating a carbon fiber and an inorganic fiber composed of Si, Ti or Zr, C and O with a thermosetting resin to form prepregs and laminating the prepregs, said interply-hybridized laminated material having a ratio of tensile modulus of said carbon fiber to tensile modulus of said inorganic fiber in the range of 0.6 to 1.4.

The present invention 2 provides an interply-hybridized laminated material manufactured by impregnating a carbon fiber and an inorganic fiber composed of Si, Ti or Zr, C and O with a thermosetting resin to form prepregs and laminating the prepregs, the laminated prepregs forming a symmetrical lamination structure along the lamination thickness with regard to the central planar area. (In the present specification, the central planar area stands for an interface between two central layers when even-numbered prepregs are used, and it also stands for a central plane in the central layer along the length of, and parallel with, the surfaces of the

central layer when odd-numbered prepregs are used.)

The present invention 3 provides an interply-hybridized laminated material manufactured by impregnating a carbon fiber and an inorganic fiber composed of Si, Ti or Zr, C and O with a thermosetting resin to form prepregs and laminating the prepregs, one of the outermost two layers being the carbon fiber-containing prepreg and the other of the outermost two layers being the inorganic fiber-containing prepreg.

DETAILED DESCRIPTION OF THE INVENTION:

In the present invention, a carbon fiber obtained from any of polyacrylonitrile, petroleum pitch and coal pitch as a precursor may be used. And a carbonaceous fiber or graphitic fiber manufactured depending upon firing temperatures may be used.

The tensile modulus of the carbon fiber differs depending upon types of the precursor, firing temperatures, and the like. In general, however, the carbonaceous fiber has a tensile modulus of 15 to 30 $t/mm^2$, and the graphitic fiber has a tensile modulus of 30 to 50 $t/mm^2$.

The inorganic fiber in the present invention may be prepared according to processes described in U.S. Patents 4,342,712 and 4,515,742, and some portions of these U.S. Patents may be quoted in the present specification.

One of the processes for the preparation of the inorganic fiber is described hereinbelow.

The inorganic fiber usable in the present invention may be prepared according to a process consisting of the following four steps.

The first step comprises forming an organic metal copolymer having a number average molecular weight of 700 to 100,000 by mixing a polycarbosilane having a main chain skeleton represented by the following formula,

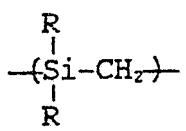

wherein R represents a hydrogen atom, a lower alkyl group or a phenyl group,
and having a number average molecular weight of 200 to 10,000 with an organic metal compound represented by the following formula

$MX_4$

wherein M represents Ti or Zr, X represents an alkoxy group having 1 to 20 carbon atoms, a phenoxy group or an acetylacetoxy group

such that the ratio of the total number of ($Si-CH_2$) structural units of the above polycarboxilane to the total number of (M- O) structural units of the above organic metal compound is in the range of from 2:1 to 200:1, and reacting the mixture under heat in an atmosphere inert to the reaction to bond at least some proportion of silicon atoms of the above polycarbosilane with metal atoms of the above organic metal compound through oxygen atoms.

The second step comprises preparing a spinning solution of the above copolymer and spinning.

The third step comprises rendering the spun fiber infusible.

The fourth step comprises firing the spun fiber, which has been rendered infusible, in vacuo or in an inert atmosphere.

The proportions of the elements contained in the inorganic fiber are as follows.

| | | |
|---|---|---|
| Si | : | 30 to 60% by weight. |
| Ti or Zr | : | 0.5 to 35 % by weight, preferably, 1 to 10 % by weight. |
| C | : | 25 to 40 % by weight. |
| O | : | 0.01 to 30 % by weight. |

In general, the above inorganic fiber has a tensile modulus in the range of from 20 to 25 $t/mm^2$.

One of the important points of the present invention 1 is concerned with a relative value of tensile moduli of the carbon fiber and inorganic fiber. That is, it is necessary that the ratio of the tensile modulus of the carbon fiber to the tensile modulus of the inorganic fiber is in the range of from 0.6 to 1.4, preferably in the range of

from 0.8 to 1.2. If the ratio of the tensile moduli of these two fibers is outside the above-specified range, the interply-hybridized laminated material obtained from these fibers is likely to cause an delamination between the carbon fiber layer and inorganic fiber layer due to a difference between the tensile moduli, and as a result, the compressive strength of the resultant laminated material is low. Therefore, in the present invention 1, it is necessary to select the carbon fiber and inorganic fiber so that the ratio of the tensile moduli of such fibers comes under the above-specified range.

In the present inventions 1 to 3, the proportion of the inorganic fiber is 1 to 80 % by volume, preferably 3 to 70 % by volume of the total volume of the inorganic fiber and carbon fiber. When the above proportion is less than 1 % by volume, the effect on improvement of the compressive strength and flexural strength of the resultant laminated material is small, and when it is more than 80 % by volume, it is difficult to impart the high tensile strength and lightness of the carbon fiber to the resultant laminated material since the ralative proprtion of the carbon fiber is rather low.

The total proportion of the carbon fiber and inorganic fiber is usually 30 to 80 % by volume, preferably 45 to 65 % by volume of the total volume of the laminated material. When the above total proportion of the carbon fiber and inorganic fiber is less than 30 % by volume, the effect on improvement of the strengths of the laminated material is hardly brought, and when the above total proportion exceeds 80 % by volume, it is difficult to manufacture the laminated material since the relative proportion of the fibers is too large.

The carbon fiber and inorganic fiber are preferably used in the form of being arranged in one direction, but may be used in the form of a woven cloth (fabric) formed by weaving these fibers. Further, these fibers may be those which have been subjected to known surface treatment and sizing treatment.

In the present invention, the thermosetting resin is not specially limited, and its examples may include epoxy resin, unsaturated polyester resin, vinyl ester resin, phenol resin, bismaleimide, polyimide, and the like. Of these resin, the epoxy resin is most preferably used. Said epoxy resin is a resin composition composed of polyepoxide, curing agent, curing catalyst, etc.

Examples of the polyepoxide include glycidyl compounds of bisphenols A, F and S, a glycidyl compound of cresol novolak or phenol novolak, alicyclic polyepoxide, and the like.

Examples of the polyepoxide other than the above include glycidyl compounds of polyvalent phenols, polyhydric alcohols or aromatic amines.

Of these polyepoxides, generally used are glycidyl ether of bisphenol A, a glycidyl compound of cresol novolak or phenol novolak, a glycidyl compound of diaminediphenylmethane, and a glycidyl compound of aminophenol. And in the case of using the lamianted material of the present invention as a material such as primary structural material for an aircraft of which high functions are required, it is desirable to select a glycidyl compound of polyfunctional amine such as diaminediphenylmethane from the above polyepoxides.

The laminated material of the present invention is manufactured by laminating prepregs obtained by impregnating the carbon fiber and the inorganic fiber with the thermosetting resin and then curing the thermosetting resin.

The prepregs are prepared according to processes known per se, for example, the prepregs can be prepared by arranging a number of filaments of each of the above fibers in one direction and placing the arranged filaments between the thermosetting resins to form prepregs, by winding a bundle of thermosetting resin-impregnated filaments about a drum to form prepregs, by arranging a number of filaments and melt-impregnating a film-shaped thermsettig resin thereto to form prepregs, by directing a woven or unwoven cloth to a thermosetting resin well and effecting impregnation and drying to form prepregs, by melt-impregnating a woven or unwoven cloth with a sheet-shaped article of the thermosetting resin to form prepregs, or by some other processes.

In the present invention 1, the lamination structure may be as symmetrical, nonsymmetrical or antisymmetrical as is often employed. And the prepreg may have any thickness, and further, no limitation is imposed on the total thickness of the laminated prepregs forming a laminated material.

In the present invention2, it is necessary to laminate the carbon fiber and inorganic fiber prepregs symmetrically along the thickness with regard to the central planar area. If the lamination structure of the laminated prepregs is nonsymmetrical with regard to the central planar area, a warpage occurs due to the difference in the shrinking stress by curing between the upper portion and lower portion of the laminated material with regard to the central planar area, since the elastic modulus or coefficient of thermal expansion differs between the carbon fiber and inorganic fiber. The difference in the shrinking stress can be removed by laminating the prepregs symmetrically with regard to the central planar area.

Any other special limitation than the above symmetrical lamination of the prepregs is not imposed on the form of lamination, structure and order of the lamianted prepregs and thickness resulting from repeatedly laminating the prepregs. In addition, the prepregs have to be laminated such that the directions of fibers in the laminated prepregs are symmetrical with regard to the central area of the laminated material.

In the present invention 3, it is necessary to form one of the outermost layers (i.e., surface layers or top and bottom layers) with a carbon fiber-containing prepreg and the other of the outermost layers with an inorganic fiber-containing prepreg. By laminating the prepregs as above, i.e., disposing an inorganic fiber-reinforced resin layer having excellent compression property in one outermost portion suffuring a maximal compression stress and a carbon fiber-reinforced resin layer having excellent tensile property in the other outermost portion suffuring a maximal tensile stress when the lamianted material of the present invention is under a static or dynamic flexural load, the flexural properties of the laminated material as a whole can be remarkably

improved. If both the top and bottom layers are composed of prepreg layers using only one of the above two fibers, it is not made possible to greatly improve the flexural properties of the resultant laminated material such as static or dynamic flexural strength or Charpy impact strength.

Any other special limitation than the above structure of the top and bottom layers is not imposed on the form of lamination, structure and order of the lamianted prepregs and thickness resulting from repeatedly laminating the prepregs.

With regard to the present inventions 1 to 3, the lamination method is not specially limited, and any known lamination method such as hand layup method, automatic layup method, or the like may be used.

There is not any limitation to be imposed on the method for forming the laminated material from the laminated prepregs, and it is possible to employ any known method such as reduced pressure bag/autoclave curing method, hot press molding method, sheet winding method, sheet wrapping method, or the like.

The curing conditions such as curing temperature, curing pressure, curing time, etc., are subject to the thermosetting resin to be used. For example, in the case of using an epoxy resin as the thermosetting resin, the general curing temperature is 100 to 250°C, preferably 120 to 200°C. Further, precuring and postcuring may be carried out as required.

The fibers-reinforced laminated material of the present invention makes it possible to give, with good reproducibility, not only simply shaped articles such as plate, pipe, etc., but also other diversely-sized three-dimensionally shaped articles having a curved surface or concavo-convex shape.

EXAMPLES

The following are Examples of the present invention and Comparative Examples. In Examples and Comparative Examples, the properties of the interply-hybridized laminated materials were measured along the fiber length ten times per each of the test pieces under the conditions where the temperature was 23°C and the relative humidity was 50 %. Of the above properties, the tensile strength (ASTMD 3039), compressive strength and flexural strength were measured by using a Tensilon UTM5T made by Orientec K.K., and the Charpy impact strength (JIS K7111) was measrued by using a Charpy impact tester made by Toyo Seiki K.K. The flexural test was carried out by a three-point bending test at a span/width=32.

| | Test piece (unit: mm) | | | Test rate |
|---|---|---|---|---|
| | Width | Length | Thickness | |
| Tensile test | 12.7 | 200 | 1.5 | 2 mm/min. |
| Compression test | 10 | 60 | 2 | 0.5 mm/min. |
| Flexural test | 12.7 | 85 | 2 | 2 mm/min. |
| Charpy impact test | 10 | 80 | 2 | 3.8 m/sec. |

The fiber volume content (Vf) of the laminated material was measured according to ASTMD 3171, and the unit thereof is "% by volume".

The interlaminar shear strength was measured according to short beam method (span/thickness ratio=4) at a test rate of 2 mm/minute under the test conditions of 23°C and 50% RH by using a test piece having a width of 12.7 mm, length of 30 mm and thickness of 2 mm.

In Examples and Comparative Examples, "part" stands for "part by weight".

The following Examples 1 to 7 and Comparative Examples 1 to 6 are concerned with the present invention 1.

EXAMPLE 1

An epoxy resin of bisphenol A type (100 parts, XB2879A manufactured by Ciba Geigy AG) and 20 parts of dicyandiamide curing agent (XB2879B manufactured by Ciba Geigy AG) were uniformly mixed, and then the mixture was dissolved in a methyl cellosolve/acetone mixed solvent having a weight ratio of 1:1 to prepare a solution having a mixture weight ratio of 28%.

A carbon fiber (Besfight HTA6000 manufactured by Toho Rayon K.K., tensile modulus: 24 $t/mm^2$, specific gravity: 1.77) was impregnated with the above solution, then taken up unidirectionally by using a drum winder, and heated in a heated-air circulating oven at 100°C for 14 minutes to prepare semi-cured prepregs of carbon fiber arranged in one direction. The prepreg had a resin content of 38 % by weight and a thickness of 0.2 mm.

An inorganic fiber composed of Si, Ti, C and O (Tyranno fiber manufactured by Ube Industries, Ltd., tensile modulus: 21 $t/mm^2$, specific gravity: 2.35) was treated in the same way as above to prepare semi-cured prepregs of Tyranno fiber arranged in one direction. The prepreg had a resin content of 30 % by weight and a thickness of 0.2 mm.

The above prepregs were disposed one on another unidirectionally according to the structure shown in Table 1, and subjected to press-shaping at 130°C at a pressure of 11 $kg/cm^2$ for 90 minutes to produce an interply-hybridized laminated material having a size of 250 mm x 250 mm and having fibers arranged in one direction. Test pieces were taken from this laminated material by using a diamond saw for the tests. The results of the tests are shown in Table 2.

EXAMPLE 2

Example 1 was repeated except that the lamination structure of the prepregs was changed as shown in Table 1. The results are shown in Table 2.

EXAMPLE 3

Example 2 was repeated except that the thickness of the Tyranno fiber prepregs was changed to 0.15 mm. The results are shown in Table 2.

EXAMPLE 4

Example 2 was repeated except that the thickness of the Tyranno fiber prepregs was changed to 0.10 mm. The results are shown in Table 2.

COMPARATIVE EXAMPLE 1

Example 1 was repeated except the use of a carbon fiber having a tensile modulus of 42 t/mm$^2$ and a specific gravity of 1.83 (Besfight HM40 manufactured by Toho Rayon K.K.). The results are shown in Table 2.

COMPARATIVE EXAMPLE 2

Example 2 was repeated except the use of the same carbon fiber as was used in Comparative Example 1. The results are shown in Table 2.

COMPARATIVE EXAMPLE 3

Example 1 was repeated except the use of no Tyranno fiber prepreg. The results are shown in Table 2.

EXAMPLES 5 - 7

Example 1 was repeated except that the lamination structure was changed as shown in Table 1. The results are shown in Table 2.

COMPARATIVE EXAMPLES 4 - 6

Comparative Example 1 was repeated except that the lamination structure was changed as shown in Table 1. The results are shown in Table 2.

Table 1

| | Ratio of tensile moduli | Ratio of T Volume % | Lamiantion structure |
|---|---|---|---|
| Example 1 | 0.9 | 31 | TCTCCCCTCT |
| Example 2 | 0.9 | 13 | TCCCCCCCCT |
| Example 3 | 0.9 | 10 | TCCCCCCCCT |
| Example 4 | 0.9 | 6 | TCCCCCCCCT |
| C-Example 1 | 0.5 | 31 | TCTCCCCTCT |
| C-Example 2 | 0.5 | 13 | TCCCCCCCCT |
| C-Example 3 | - | 0 | CCCCCCCCCC |
| Example 5 | 0.9 | 31 | TTTTCCCCCC |
| Example 6 | 0.9 | 13 | TTCCCCCCCC |
| Example 7 | 0.9 | 6 | TCCCCCCCCC |
| C-Example 4 | 0.5 | 31 | TTTTCCCCCC |
| C-Example 5 | 0.5 | 13 | TTCCCCCCCC |
| C-Example 6 | 0.5 | 6 | TCCCCCCCCC |

T: Tyranno fiber layer, C: carbon fiber layer

Table 2

| | Vf Volume % | Tensile strength kg/mm² | Interlaminar shear strength kg/mm² | Charpy impact strength kg·cm/cm² |
|---|---|---|---|---|
| Ex. 1 | 54 | 175 | 9.8 | 176 |
| Ex. 2 | 55 | 186 | 9.8 | 152 |
| Ex. 3 | 54 | 188 | 9.8 | 150 |
| Ex. 4 | 52 | 190 | 9.7 | 147 |
| C-Ex. 1 | 55 | 120 | 8.4 | 123 |
| C-Ex. 2 | 53 | 119 | 9.0 | 98 |
| C-Ex. 3 | 52 | 175 | 9.0 | 109 |
| Ex. 5 | 53 | 185 | 9.7 | 220 |
| Ex. 6 | 55 | 196 | 9.9 | 192 |
| Ex. 7 | 52 | 191 | 10.3 | 158 |
| C-Ex. 4 | 54 | 126 | 8.6 | 164 |
| C-Ex. 5 | 55 | 125 | 8.7 | 130 |
| C-Ex. 6 | 53 | 139 | 8.7 | 87 |

Table 2 (continued)

| | Compressive strength kg/mm² | Flexural strength kg/mm² | Delamination |
|---|---|---|---|
| Ex. 1 | 150 | 176 | low degree |
| Ex. 2 | 145 | 170 | low degree |
| Ex. 3 | 140 | 173 | low degree |
| Ex. 4 | 136 | 171 | low degree |
| C-Ex. 1 | 79 | 135 | extreme |
| C-Ex. 2 | 82 | 125 | extreme |
| C-Ex. 3 | 114 | 168 | low degree |
| Ex. 5 | 150 | 220 | low degree |
| Ex. 6 | 145 | 210 | low degree |
| Ex. 7 | 138 | 171 | low degree |
| C-Ex. 4 | 80 | 168 | extreme |
| C-Ex. 5 | 76 | 156 | extreme |
| C-Ex. 6 | 84 | 149 | extreme |

The following Examples 8 to 13 and Comparative Examples 7 to 12 are concerned with the present invention 2.

Data of warpage (%) of the laminated material was obtained from the following eauqation by placing a 250

mm x 250 mm x 2 mm test piece on a plane plate and measruing a maximal warpage height and the length of a minimal contact length.
Warpage = maximal warpage height ÷ length of minimal contact portion x 100

EXAMPLE 8

An epoxy resin of bisphenol A type (100 parts, XB2879A manufactured by Ciba Geigy AG) and 20 parts of dicyandiamide curing agent (XB2879B manufactured by Ciba Geigy AG) were uniformly mixed, and then the mixture was dissolved in a methyl cellosolve/acetone mixed solvent having a weight ratio of 1:1 to prepare a solution having a mixture weight ratio of 28%.

A carbon fiber (Besfight HTA6000 manufactured by Toho Rayon K.K., tensile modulus: 24 t/mm$^2$, specific gravity: 1.77) was impregnated with the above solution, then taken up unidirectionally by using a drum winder, and heated in a heated-air circulating oven at 100°C for 14 minutes to prepare semi-cured prepregs of carbon fiber arranged in one direction. The prepreg had a resin content of 38 % by weight and a thickness of 0.2 mm.

An inorganic fiber composed of Si, Ti, C and O (Tyranno fiber manufactured by Ube Industries, Ltd., tensile modulus: 21 t/mm$^2$, specific gravity: 2:35) was treated in the same way as above to prepare semi-cured prepregs of Tyranno fiber arranged in one direction. The prepreg had a resin content of 30 % by weight and a thickness of 0.2 mm.

The above prepregs were disposed one on another unidirectionally according to the structure shown in Table 3, and subjected to press-shaping at 130°C at a pressure of 11 kg/cm$^2$ for 90 minutes to produce an interply-hybridized laminated material having a size of 250 mm x 250 mm and having fibers arranged in one direction. Test pieces were taken from this laminated material by using a diamond saw for the test. The results of the tests are shown in Table 4.

EXAMPLE 9

Example 8 was repeated except that the lamination structure of the prepregs was changed as shown in Table 3. The results are shown in Table 4.

EXAMPLE 10

Example 9 was repeated except that the thickness of the Tyranno fiber prepregs was changed to 0.15 mm. The results are shown in Table 4.

EXAMPLE 11

Example 9 was repeated except that the thickness of the Tyranno fiber prepregs was changed to 0.10 mm. The results are shown in Table 4.

EXAMPLE 12

Example 8 was repeated except the use of a carbon fiber having a tensile modulus of 42 t/mm$^2$ and a specific gravity of 1.83 (Besfight HM40 manufactured by Toho Rayon K.K.). The results are shown in Table 4.

EXAMPLE 13

Example 9 was repeated except the use of the same carbon fiber as was used in Example 12. The results are shown in Table 4.

COMPARATIVE EXAMPLES 7 - 9

Example 8 was repeated except that the lamination structure was changed as shown in Table 3. The results are shown in Table 4.

COMPARATIVE EXAMPLES 10 - 12

Example 12 was repeated except that the lamination structure was changed as shown in Table 3. The results are shown in Table 4.

Table 3

| | Ratio of T volume % | Lamiantion structure |
|---|---|---|
| Example 8 | 31 | TCTCCCCTCT |
| Example 9 | 13 | TCCCCCCCCT |
| Example 10 | 10 | TCCCCCCCCT |
| Example 11 | 6 | TCCCCCCCCT |
| Example 12 | 31 | TCTCCCCTCT |
| Example 13 | 13 | TCCCCCCCCT |
| C-Example 7 | 31 | TTTTCCCCCC |
| C-Example 8 | 13 | TTCCCCCCCC |
| C-Example 9 | 6 | TCCCCCCCCC |
| C-Example 10 | 31 | TTTTCCCCCC |
| C-Example 11 | 13 | TTCCCCCCCC |
| C-Example 12 | 6 | TCCCCCCCCC |

T: Tyranno fiber layer, C: carbon fiber layer

Table 4

| | Vf Volume % | Tensile strength $kg/mm^2$ | Interlaminar shear strength $kg/mm^2$ | Charpy impact strength $kg \cdot cm/cm^2$ |
|---|---|---|---|---|
| Ex. 8 | 54 | 175 | 9.8 | 176 |
| Ex. 9 | 55 | 186 | 9.8 | 152 |
| Ex. 10 | 54 | 188 | 9.8 | 150 |
| Ex. 11 | 52 | 190 | 9.7 | 147 |
| C-Ex. 7 | 53 | 185 | 9.7 | 220 |
| C-Ex. 8 | 55 | 196 | 9.9 | 192 |
| C-Ex. 9 | 52 | 191 | 10.3 | 158 |
| Ex. 12 | 55 | 120 | 8.4 | 123 |
| Ex. 13 | 53 | 119 | 9.0 | 98 |
| C-Ex. 10 | 54 | 126 | 8.6 | 164 |
| C-Ex. 11 | 55 | 125 | 8.7 | 130 |
| C-Ex. 12 | 53 | 139 | 8.7 | 87 |

Table 4 (continued)

| | Compressive strength kg/mm² | Warpage % |
|---|---|---|
| Ex. 8 | 150 | 0 |
| Ex. 9 | 145 | 0 |
| Ex. 10 | 140 | 0 |
| Ex. 11 | 136 | 0 |
| C-Ex. 7 | 150 | 1.68 |
| C-Ex. 8 | 145 | 1.26 |
| C-Ex. 9 | 138 | 1.04 |
| Ex. 12 | 79 | 0 |
| Ex. 13 | 82 | 0 |
| C-Ex. 10 | 80 | 2.18 |
| C-Ex. 11 | 76 | 1.70 |
| C-Ex. 12 | 84 | 1.45 |

The following Examples 14 to 19 and Comparative Examples 13 to 18 are concerned with the present invention 3. The flexural test and Charpy impact test were measured by applying a load on a Tyranno layer surface of the laminated material.

EXAMPLE 14

An epoxy resin of bisphenol A type (100 parts, XB2879A manufactured by Ciba Geigy AG) and 20 parts of dicyandiamide curing agent (XB2879B manufactured by Ciba Geigy AG) were uniformly mixed, and then the mixture was dissolved in a methyl cellosolve/acetone mixed solvent having a weight ratio of 1:1 to prepare a solution having a mixture weight ratio of 28%.

A carbon fiber (Besfight HTA6000 manufactured by Toho Rayon K.K., tensile modulus: 24 t/mm², specific gravity: 1.77) was impregnated with the above solution, then taken up unidirectionally by using a drum winder, and heated in a heated-air circulating oven at 100°C for 14 minutes to prepare semi-cured prepregs of carbon fiber arranged in one direction. The prepreg had a resin content of 38 % by weight and a thickness of 0.2 mm.

An inorganic fiber composed of Si, Ti, C and O (Tyranno fiber manufactured by Ube Industries, Ltd., tensile modulus: 21 t/mm², specific gravity: 2.35) was treated in the same way as above to prepare semi-cured prepregs of Tyranno fiber arranged in one direction. The prepreg had a resin content of 30 % by weight and a thickness of 0.2 mm.

The above prepregs were disposed one on another unidirectionally according to the structure shown in Table 5, and subjected to press-shaping at 130°C at a pressure of 11 kg/cm² for 90 minutes to produce an interply-hybridized laminated material having a size of 250 mm x 250 mm and having fibers arranged in one direction. Test pieces were taken from this laminated material by using a diamond saw for the tests. The results of the tests are shown in Table 6.

EXAMPLES 15 - 16

Example 14 was repeated except that the lamination structure of the prepregs was changed as shown in Table 5. The results are shown in Table 6.

EXAMPLE 17

Example 14 was repeated except the use of a carbon fiber having a tensile modulus of 42 t/mm² and a specific gravity of 1.83 (Besfight HM40 manufactured by Toho Rayon K.K.). The results are shown in Table 6.

EXAMPLE 18

Example 15 was repeated except the use of the same carbon fiber as was used in Example 15. The results are shown in Table 6.

EXAMPLE 19

Example 16 was repeated except the use of the same carbon fiber as was used in Example 17. The results are shown in Table 6.

COMPARATIVE EXAMPLES 13 - 14

Example 14 was repeated except that the lamination structure was changed as shown in Table 5. The results are shown in Table 6.

COMPARATIVE EXAMPLE 15

Example 14 was repeated except thast no Tyranno fiber prepreg was used. The results are shown in Table 6.

COMPARATIVE EXAMPLES 16 - 17

Example 17 was repeated except that the lamination structure was changed as shown in Table 5. The results are shown in Table 6.

COMPARATIVE EXAMPLE 18

Example 17 was repeated except that no Tyranno fiber prepreg was used. The results are shown in Table 6.

Table 5

| | Ratio of T volume % | Lamiantion structure |
|---|---|---|
| Example 14 | 31 | TTTTCCCCCC |
| Example 15 | 13 | TTCCCCCCCC |
| Example 16 | 6 | TCCCCCCCCC |
| Example 17 | 31 | TTTTCCCCCC |
| Example 18 | 13 | TTCCCCCCCC |
| Example 19 | 6 | TCCCCCCCCC |
| C-Example 13 | 31 | TCTCCCCTCT |
| C-Example 14 | 13 | TCCCCCCCCT |
| C-Example 15 | 0 | CCCCCCCCCC |
| C-Example 16 | 31 | TCTCCCCTCT |
| C-Example 17 | 13 | TCCCCCCCCT |
| C-Example 18 | 0 | CCCCCCCCCC |

T: Tyranno fiber layer, C: carbon fiber layer

Table 6

| | Vf Volume % | Tensile strength kg/mm² | Interlaminar shear strength kg/mm² |
|---|---|---|---|
| Ex. 14 | 53 | 185 | 9.7 |
| Ex. 15 | 55 | 196 | 9.9 |
| Ex. 16 | 52 | 191 | 10.3 |
| C-Ex. 13 | 54 | 175 | 9.8 |
| C-Ex. 14 | 55 | 186 | 9.8 |
| C-Ex. 15 | 52 | 175 | 9.0 |
| Ex. 17 | 54 | 126 | 8.6 |
| Ex. 18 | 55 | 125 | 8.7 |
| Ex. 19 | 53 | 139 | 8.7 |
| C-Ex. 16 | 55 | 120 | 8.4 |
| C-Ex. 17 | 53 | 119 | 9.0 |
| C-Ex. 18 | 54 | 130 | 8.0 |

Table 6 (continued)

| | Compressive strength kg/mm² | Flexural strength kg/mm² | Charpy Impact strength kg·cm/cm² |
|---|---|---|---|
| Ex. 14 | 150 | 220 | 220 |
| Ex. 15 | 145 | 210 | 192 |
| Ex. 16 | 138 | 171 | 158 |
| C-Ex. 13 | 150 | 176 | 176 |
| C-Ex. 14 | 145 | 170 | 152 |
| C-Ex. 15 | 114 | 168 | 109 |
| Ex. 17 | 80 | 168 | 164 |
| Ex. 18 | 76 | 156 | 130 |
| Ex. 19 | 84 | 149 | 87 |
| C-Ex. 16 | 79 | 135 | 123 |
| C-Ex. 17 | 82 | 125 | 98 |
| C-Ex. 18 | 80 | 115 | 49 |

## Claims

1. A process for preparing an interply-hybridized laminated material which comprises impregnating carbon fiber and inorganic fiber composed of Si, Ti or Zr, C and O with thermosetting resin to form respective prepregs, and laminating the prepregs, the ratio of the tensile modulus of the carbon fiber to that of the inorganic fiber being from 0.6/1 to 1.4/1.

2. A process for preparing an interply-hybridized laminated material which comprises impregnating carbon fiber and inorganic fiber composed of Si, Ti or Zr, C and O with thermosetting resin to form respective prepregs, and laminating the prepregs, the lamination structure of the prepregs being symmetrical with regard to the central planar area of the laminated material.

3. A process according to claim 2 wherein the directions of fibers in the laminated prepregs are symmetrical with regard to the central planar area of the laminated material.

4. A process for preparing an interply-hybridized laminated material which comprises impregnating carbon fiber an inorganic fiber composed of Si, Ti or Zr, C and O with thermosetting resin to form respective prepregs, and laminating the prepregs, wherein one of the outermost layers of the laminated material derives from a carbon fiber-containing prepreg and the other derives from an inorganic fiber-containing prepreg.

5. A process according to any one of the preceding claims wherein the carbon fiber is a carbonaceous fiber or graphitic fiber.

6. A process according to any one of the preceding claims wherein the inorganic fiber has been obtained by spinning from an organic metal compound obtained by reacting a polycarbosilane having a main chain skeleton represented by the formula

$$\left( \begin{array}{c} R \\ | \\ Si \\ | \\ R \end{array} -CH_2 \right)$$

wherein R represents a hydrogen atom, a lower alkyl (preferably $C_1$ to $C_4$) group or a phenyl group,and having a number average molecular weight of 200 to 10,000 with an organic metal compound represented by the formula

$MX_4$

wherein M represents Ti or Zr and X represents an alkoxy group having 1 to 20 carbon atoms, a phenyl group or an acetylacetoxy group,

in an atmosphere inert to the reaction under heat, and firing the spun fiber.

7. A process according to any one of the preceding claims wherein the inorganic fiber has elemental proportions consisting of 30 to 60% by weight of Si, 0.5 to 35% by weight of Ti or Zr, 25 to 40% by weight of C and 0.01 to 30% by weight of O.

8. A process according to any one of the preceding claims wherein the proportion of inorganic fiber is 1 to 80% by volume based on the total volume of inorganic fiber and carbon fiber.

9. A process according to any one of the preceding claims wherein the total volume of inorganic fiber and carbon fiber is 30 to 80% of the total volume of the laminated material.

10. A process according to any one of the preceding claims wherein the laminated material is obtained by laminating the prepregs and thereafter curing the thermosetting resin.